# EUROPEAN PATENT APPLICATION

(11) **EP 2 275 012 A1**
(43) Date of publication of application: **19.01.2011**
(21) Application number: 09731922.2
(22) Date of filing: 10.04.2009
(51) Int. Cl.: A47J 43/04, A47J 31/00, A47J 19/00

(54) **PROCESSING CONTAINER STRUCTURE FOR FOOD PROCESSOR**

(30) Priority: 17.04.2008 CN 200820102022 U
(71) Applicant: Tsann Kuen (China) Enterprise Co., Ltd, Xiamen Fujian 361006 (CN)
(72) Inventor: LIANG, Dingwei, Fujian 361006 (CN); LI, Ke, Fujian 361006 (CN)
(74) Representative: Garavelli, Paolo
(86) International application number: PCT/CN2009/071218
(87) International publication number: WO 2009/127143

(57) **Abstract**

A processing container structure for food processor is provided. The structure has a processing container main body (10) whose inside walls (11, 12, 13, 14) are uniformly provided with multiple ribs (2) arranged vertically. The ribs (2) have certain lengths and thicknesses and protrude inwards. The protruding areas of the ribs (2) are gradually increased from top to bottom.

## Description

### Field of the invention

The present invention relates to a home appliance, especially a processing container structure for food processor.

### Background of the invention

The food processor comprises a processing container; said processing container is usually used for containing food so as to process it, such as for making dough or stirring other food which needs to be melted, in order to achieve a better stirring effect; the processing container for food processing of the conventional technique vertically disposes multiple protruding ribs on the inner wall of the container, then the food can be extruded by those ribs when stirring, the protruding area of each of the protruding rib being similar from top to bottom, and its protruding thickness being also similar, so the extruding areas and extruding height of the ribs are similar when the food which needs to be melted is being stirred or when making dough by this kind of rib structure: thus, it is difficult to melt the food quickly and uniformly, and the food cannot be processed quickly.

### Summary of the invention

Object of the present invention is overcoming the shortages of the conventional technique, and providing a processing container structure for food processor; through the present processing container structure, the food can be melted quickly in the processing, thereby the processing time can be greatly saved.

The technical solution applied by the present invention is: a processing container structure for food processor, comprising a processing container main body, whose inner walls are uniformly provided with multiple ribs arranged vertically, the ribs having certain lengths and thickness and protruding inwardly, the protruding areas of the ribs being gradually increased from top to bottom.

A processing container structure for food process, comprising a processing container main body, which comprises four walls, wherein whose walls are uniformly provided with multiple ribs arranged vertically, the ribs being formed by die casting or pressure casting and have certain lengths and thickness and protrude inwardly, the protruding areas of the ribs being gradually increased from top to bottom, and the shape of rib which is disposed on the opposite wall being asymmetrical.

The protruding thickness of said rib is gradually increased from a side which faces the food rotation direction to another side.

The side edge of rib which faces the food rotation direction is designed as hypotenuse, and said hypotenuse inclines gradually backwardly from bottom to top.

The side edge of rib which faces the food rotation direction is designed as an arcuate edge, and said arcuate edge inclines gradually backwardly from bottom to top.

Another side of said rib is designed as a vertical edge.

The two side edges of the protruding surface of said rib are arcuate transitively from the protruding surface to the inner wall of the processing container main body.

The processing container structure for food processing of the present invention improves the inwardly protrude rib disposed on the inner wall of the main body; the rib is formed as to protrude inwardly by die casting or press casting on the wall of the main body, thereby, viewed from the outside of the processing container main body, the wall of which the rib is designed to form a depression, so the thickness of the main body is kept uniformly. The ribs are disposed vertically, so the food can be extruded in the stirring process. The most distinguishing feature of rib is that the protruding areas of the ribs are gradually increased from top to bottom, that is, when the protruding thickness of the ribs is kept uniformly, its protruding areas would be gradually increased from top to bottom, so the flow direction of the food can be changed in the stirring process; in that process, the bottom food would continuously be extruded from bottom to top and do a circular motion relative to the axes, especially when the side edge of the rib which faces the food rotation direction is designed as hypotenuse, and the hypotenuse inclines gradually from the bottom to the top: in such a structure, the hypotenuse of the rib would move forwardly relative to the food when stirring, so the food from the bottom would be easily extruded to the top by the hypotenuse of rib; further, the protruding thickness of the rib would be gradually increased from a side which faces the food rotation direction to another side, then the differences of the thickness of the rib would extrude the food towards outside of the axes, thereby the food is extruded from bottom to top and from outside to inside, and can be melted uniformly: thereby the processing time would be greatly saved.

In the processing container structure for food processing of the present invention, the protruding shape of the rib can be an upright triangle, and the side edge of the rib which faces the rotation of food is designed as hypotenuse and inclines backwardly from bottom to top; another side edge of the rib can be a hypotenuse or a straight edge: when another side edge is a hypotenuse, then the protruding shape of the rib is an arbitrary triangle, when another side edge is a vertical edge, then the protruding shape of the rib is a right-angled triangle. The shape of the rib can surely be other shapes, as long as its protruding area would be gradually increased from top to bottom, such as semi-circle, or semi-ellipse, or trapezoid and other shapes.

In the processing container structure for food processing of the present invention, the number of the ribs is not limited and disposed uniformly on the circumferential wall of the processing container main body; in a processing container structure which comprises four walls, the number of ribs can only be one for each wall, the shape of the ribs which are disposed on the opposite wall being asymmetrical. Of course, there can be more than one rib disposed on each wall.

The beneficial effects of the present invention are: a plurality of ribs are vertically and uniformly disposed on the inner wall of the main body by die casting or press casting, which have certain lengths and thickness and protrude inwardly; further the protruding areas of the ribs are gradually increased from top to bottom, and several benefits are brought by using such structure:

1. The food can be melted quickly and its processing time can be greatly saved.

2. The heating area of the food is larger.

3. The stirring of food is more uniform.

The side edge of rib which faces the food rotation direction is a hypotenuse, and the hypotenuse inclines gradually from bottom to top, in such a structure, the hypotenuse of the rib would move forwardly relative to the food when stirring, so the food from the bottom would be easily extruded to the top by the hypotenuse of rib and be melted quickly and uniformly; further, because the protruding thickness of the rib would be gradually increased from a side which faces the food rotation direction to another side: then the differences of the thickness of the rib would be efficient to extrude the food towards the out of the axes, thereby the food can be melted more uniformly.

The present invention will become apparent with reference to the accompanying drawings and the preferred embodiments, but the processing container structure for food processor of the present invention is not limited to such embodiments.

### Brief description of the drawings

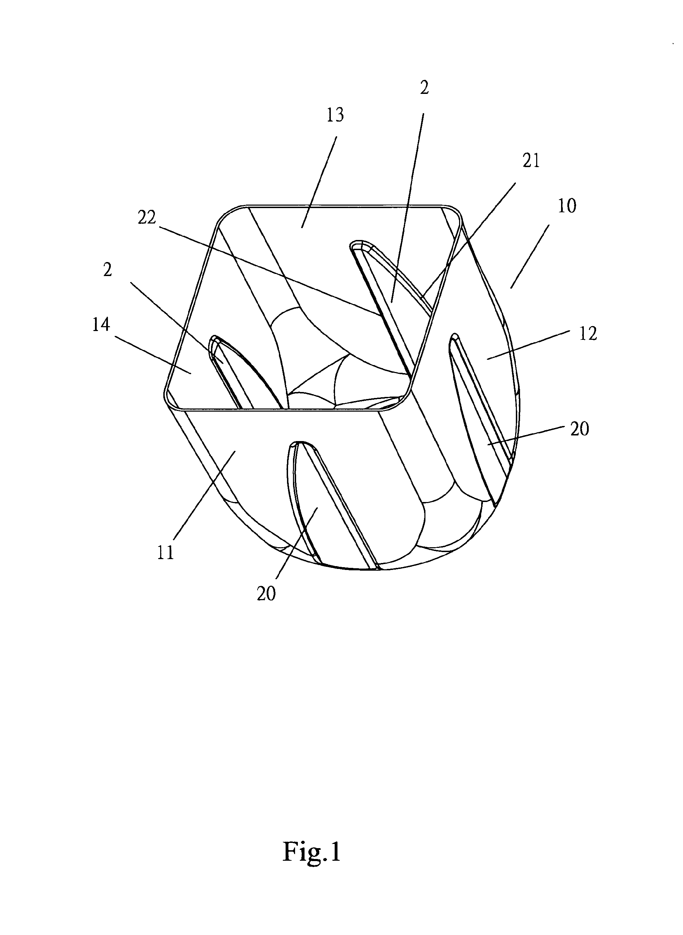

Fig.1 shows a structural view of the present invention;

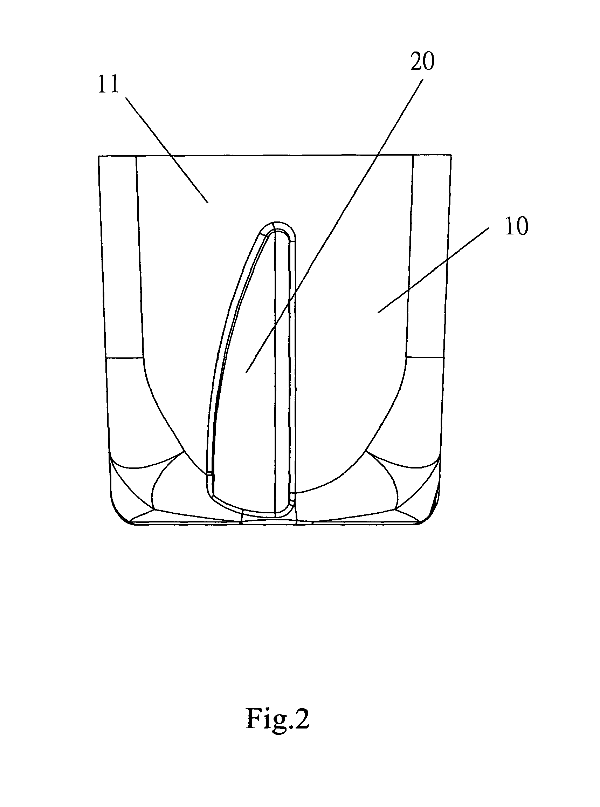

Fig.2 shows the front view of the structure of fig.1.

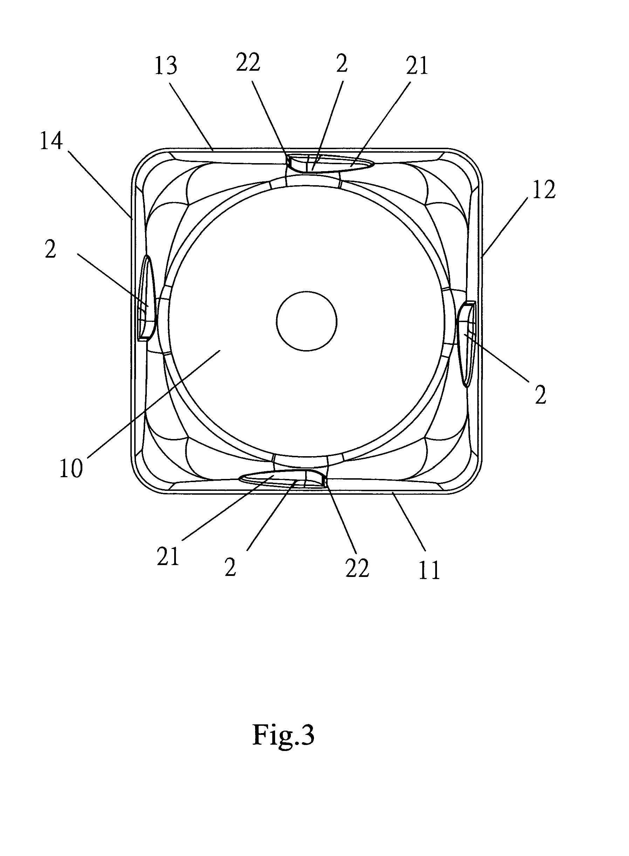

Fig.3 shows the top view of the structure of fig.1.

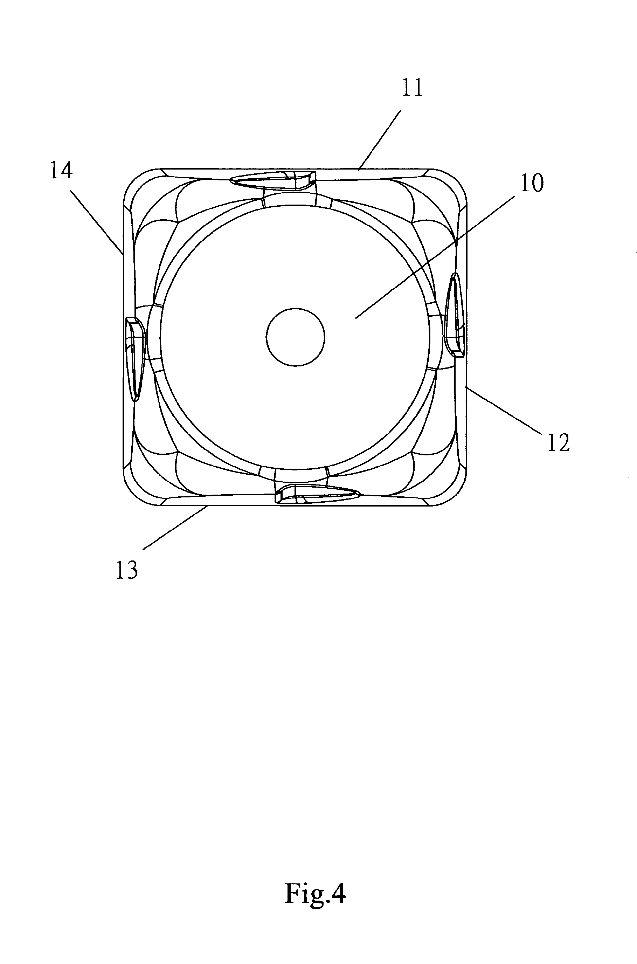

Fig.4 shows the bottom view of the structure of fig.1.

### Detailed description of the embodiments

Referring to the accompanying drawings, the processing container structure for food processing of the present invention comprises a processing container main body 10, whose inner walls are uniformly provided with multiple ribs 2 arranged vertically and to be formed by die casting or press casting; the ribs have certain lengths and thickness and protrude inwardly, the protruding areas of the ribs 2 being gradually increased from top to bottom.

Said processing container main body 10 comprises four walls 11\12\13\14, and each wall 11\12\13\14 is respectively disposed with a rib 2, the shape of the rib which is disposed on the opposite wall being asymmetrical.

The protruding thickness of said rib is gradually increased from a side 21 which faces the food rotation direction to another side 22.

The side edge 21 of rib which faces the food rotation direction is designed as an arcuate edge, and said arcuate edge 21 inclines gradually backwardly from bottom to top.

Another side 22 of said rib is designed as a vertical edge.

The two side edges 21\22 of the protruding surface of said rib are arcuate transitively from the protruding surface to the inner wall of the processing container main body.

The processing container structure for food processing of the present invention improves the inwardly protruded ribs disposed on the inner wall of the main body; the ribs 2 are protruding inwardly and formed by die casting or press casting on the wall of the main body 10; thereby, viewed from the outside of the processing container main body, the wall of which the rib is disposed forms a depression 20, so the thickness of the main body is kept uniformly. The ribs 2 are disposed vertically, so the food can be extruded in the stirring process. The most distinguished feature of the ribs 2 is that the protruding areas of the ribs are gradually increased from top to bottom, that is, when the protruding thickness of the ribs 2 are kept uniformly, its protruding areas would be gradually increased from top to bottom, so the flow direction of the food can be changed when stirring; in that process, the bottom food would continuously be extruded from bottom to top and do a circular motion relative to the axes, especially when the side edge 21 of the rib 2 which faces the food rotation direction is designed as an arcuate edge, and the arcuate edge 21 inclines gradually from the bottom to the top, in such a structure, the arcuate edge 21 of the rib would move forwardly relative to the food when stirring, so the food from the bottom would be easily extruded to the top by the arcuate edge of rib; further, the protruding thickness of the rib would be gradually increased from the side 21, which faces the food rotation direction to another side 22, then the differences of the thickness of the rib would extrude the food towards outside of the axes, thereby the food is extruded from bottom to top and from outside to inside, and can be melted uniformly: thereby the processing time would be greatly saved.

In the processing container structure for food processing of the present invention, the protrude shape of the rib 2 can be an upright triangle, and the side edge 21 of the rib which faces the rotation of food is defined as hypotenuse and inclines backwardly from bottom to top; another side edge 22 of the rib is designed as another edge of the triangle, that is designed as a vertical edge, so the whole protruding shape of the rib is like a right-angle triangle. Of course, another side edge can be designed as a hypotenuse, then the protruding shape of the rib is an arbitrary triangle. The shape of the rib can surely be other shapes, as long as its protruding areas would be gradually increased from top to bottom, such as semi-circle, or semi-ellipse, or trapezoid or abnormity and other shapes.

In the processing container structure for food processing of the present invention, the rib is disposed respectively on each wall 11\12\13\14 of the main body 10, that is, each wall 11\12\13\14 is respectively disposed with a rib; of course, there can be more than one rib disposed on the wall.

Of course, the number of the rib 2 is not limited within a certain number, the processing container main body can also be a circular bucket; for such a circular bucket, as long as the ribs can be disposed uniformly on the inner wall of the main body, the number of the rib can be 2 or 3 or 4 or 5, and so on.

Although the present invention has been described with reference to the preferred embodiments thereof for carrying out the invention, it is apparent to those skilled in the art that a variety of modifications and changes may be made without departing from the scope of the present invention which is intended to be defined by the appended claims.

### Industrial applicability

In the processing container structure for food processing of the present invention, the inner wall of the processing container main body is uniformly and vertically disposed with a plurality of ribs which have certain lengths and thickness and protrude inwardly, the protruding areas of said ribs being gradually increased from top to bottom. In the operation process, the food from the bottom would be extruded from bottom to top and do a circular motion relative to the axes from the outside to the inside, thereby the food can be melted quickly in the process, so the processing time can be greatly saved: the present processing container structure for food processing has a good industrial applicability.

## Claims

1. A processing container structure for food processor, comprising a processing container main body, whose inner walls are uniformly provided with multiple ribs arranged vertically, the ribs having certain lengths and thickness and protruding inwardly, the protruding areas of the ribs being gradually increased from top to bottom.

2. The processing container structure for food processor according to claim 1, wherein said main body comprises four walls, each wall being respectively disposed with a rib, and the shape of which rib disposed on the opposite wall being asymmetrical.

3. The processing container structure for food processor according to claim 1 or claim 2, wherein the protruding thickness of said rib is gradually increased from a side which faces the food rotation direction to another side.

4. The processing container structure for food processor according to claim 1 or claim 2, wherein the side edge of rib which faces the food rotation direction is designed as hypotenuse, and said hypotenuse inclines gradually backwardly from bottom to top.

5. The processing container structure for food processor according to claim 3, wherein the side edge of rib which faces the food rotation direction is designed as hypotenuse, and said hypotenuse inclines gradually backwardly from bottom to top.

6. The processing container structure for food processor according to claim 1 or claim 2, wherein the side edge of rib which faces the food rotation direction is designed as an arcuate edge, and said arcuate edge inclines gradually backwardly from bottom to top.

7. The processing container structure for food processor according to claim 3, wherein the side edge of rib which faces the food rotation direction is designed as an arcuate edge, and said arcuate edge inclines gradually backwardly from bottom to top.

8. The processing container structure for food processor according to claim 5 or claim 7, wherein another side of said rib is designed as a vertical edge.

9. The processing container structure for food processor according to claim 4, wherein another side of said rib is designed as a vertical edge.

10. The processing container structure for food processor according to claim 6, wherein another side of said rib is designed as a vertical edge.
